# EUROPEAN PATENT SPECIFICATION

(11) **EP 0 851 987 B1**
(45) Date of publication and mention of the grant of the patent: **06.02.2002**
(21) Application number: 96930034.2
(22) Date of filing: 18.09.1996
(51) Int. Cl.: F16L 55/165

(54) **HYDRAULICALLY ACTUATABLE EXPANDER**
HYDRAULISCH ANGETRIEBENE ERWEITERUNGSVORRICHTUNG
MANDRIN ELARGISSEUR A COMMANDE HYDRAULIQUE

(30) Priority: 19.09.1995 DK 103995
(43) Date of publication of application: 08.07.1998
(73) Proprietor: Knudsen, Jens Christian Haugaard, 3140 Alsgarde (DK)
(72) Inventor: Knudsen, Jens Christian Haugaard, 3140 Alsgarde (DK)
(74) Representative: Lichtenberg, Erik
(86) International application number: DK9600393
(87) International publication number: WO9711306

(56) References cited:
- EP-A- 0 060 715
- EP-A- 0 324 287
- WO-A-88/10393
- DE-A- 4 410 900

## Description

### Technical Field.

The invention relates to a hydraulically actuatable expander of the type described in the preamble of claim 1.

### Background Art

DK-PS No. 160,578B discloses an apparatus for expanding an underground passageway, such as a sewer, or for removing irregularities therein while moving through said passageway. The known apparatus comprises an expandable, segmented section with a series of shell parts or shell elements placed around a longitudinal axis on the apparatus, and with associated outwardly directed surface sections engaging the sides of the passageway. These shell parts are movable in the lateral direction relative to the longitudinal axis from a concentrated configuration to an expanded configuration in such a manner that they press against the side of the passageway or the sewer. Furthermore, the apparatus comprises a nose part extending in the longitudinal axis in front of the segmented section and having an outer surface for the engagement with the sides of the passageway in front of the segmented section. This apparatus comprises a large number of interconnected bars serving to alternately expand the segmented section and the nose part in such a manner that the sewer is expanded while the apparatus is allowed to pass through said sewer. The bars are moved by means of a hydraulic jack accommodated inside the apparatus, said jack being actuated in the longitudinal direction of the apparatus. Thus the apparatus can be forced through the sewer or the pipeline by a repeated actuation of the hydraulic jack with the indicated positioning, said jack being alternately connected and disconnected at each stroke by means of a chain or a wire connected to the apparatus through the pipeline. While the apparatus is pulled through the pipeline, a pipe liner of a corresponding diameter is simultaneously pulled after the apparatus through the pipeline. As a result, the pipeline is straightened and repaired.

DK Patent Application No. 285/88 (WO-A-87/07322) discloses an apparatus of a corresponding nature which has been further developed such that no loose particles of material from the wall of the pipeline penetrate into the apparatus between the shell elements, said shell elements being shaped and arranged so as to overlap one another also during the expansion.

### Brief Description of the Invention

The object of the present invention is to provide a hydraulically actuatable expander of the above type which possesses a very high expansion force, which avoids the problem of penetrating loose particles of material from the wall of the pipeline or the ground, and which is capable of leaving the straightened pipeline in a supported state in such a manner that it is ready for a final repair or has been prepared for a specific repair prior to insertion of a new synthetic lining.

This object is according to the invention obtained by the hydraulically actuatable expander comprising the subject matter stated in claim 1.

### Brief Description of the Drawings

The invention is described in greater detail below with reference to the accompanying drawing illustrating an embodiment according to the invention, and in which
Fig. 1 is a longitudinal sectional view taken along the line A-A of Fig. 2 of a hydraulically actuatable expander according to the invention,
Fig. 2 is a left end view of the expander of Fig. 1,
Fig. 3 is a right end view of the expander of Fig. 1,
Fig. 4 is a cross-sectional view taken along the line B-B through the expander of Fig. 1,
Fig. 5 illustrates the same view as Fig. 4 when the expander enters an expanded state,
Fig. 6 is a cross-sectional view taken along the line C-C through the expander of Fig. 1,
Fig. 7 illustrates the same view as Fig. 6 when the expander enters an expanded state,
Fig. 8 illustrates on a larger scale the same view as Fig. 4,
Fig. 9 illustrates on a larger scale the same view as Fig. 5,
Fig. 10 illustrates on a larger scale the same view as Fig. 6,
Fig. 11 illustrates on a larger scale the same view as Fig. 7,
Fig. 12 is like Fig. 2 a left end view of the expander, but on a larger scale and with a flexible plate arranged around the expander and provided with overlapping edges and locking means adjacent said edges,
Fig. 13 illustrate the same view as Fig. 12 when the expander enters an expanded state and the locking means at the two edges of the plate have entered a locking engagement with one another, and
Fig. 14 illustrates on a larger scale the area indicated by means of the circle D in Fig. 13 of the mutually engaging locking means.

### Best Mode for Carrying Out the Invention

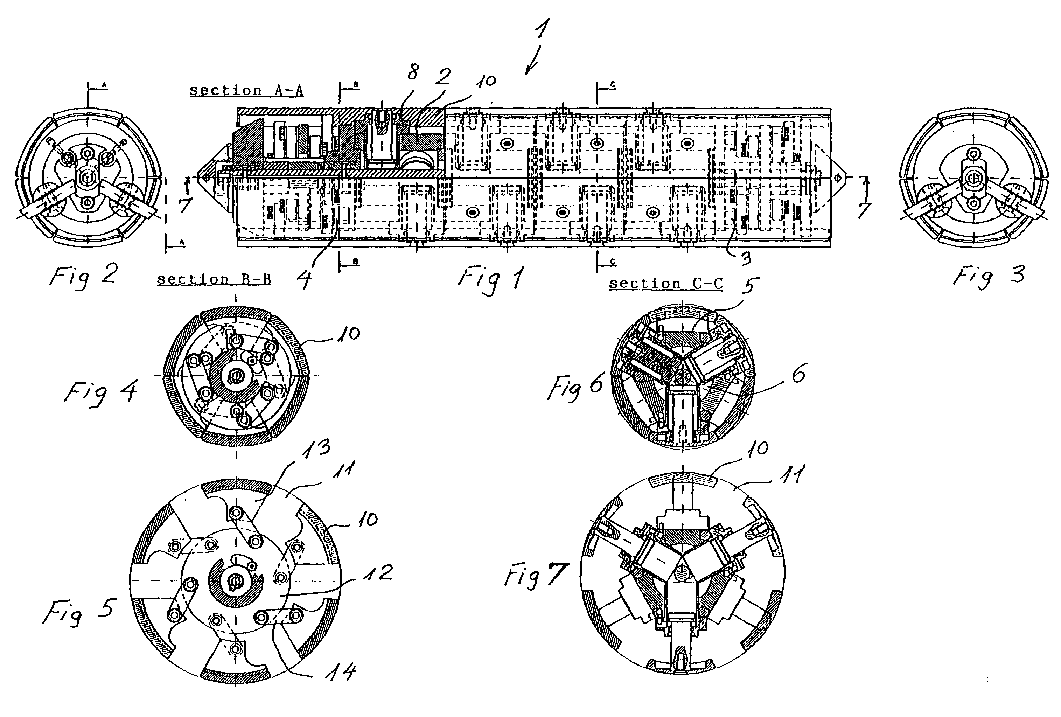

Fig. 1 illustrates a hydraulically actuatable expander according to the invention, but without the flexible plate which must be left in a straightened pipeline.The expander 1 comprises an elongated cylinder housing 2, which in the illustrated embodiment is made of four interconnected modules assembled by means of through stay bolts, each end of said stay bolts being indicated by means of 3 and 4, respectively. Such a module is shown with hatched lines immediately to the right of the sectional line B-B of Fig. 1. This module comprises three bores in each of the two sections succeeding one another in the longitudinal direction. The subsequent three modules are correspondingly structured. The elongated cylinder housing 2 is thus made of these four modules, and in the illustrated embodiment it is manufactured with a hexagonal surface 5 and a cylindrical longitudinal perforation 6, the axis of which coincides with the central longitudinal axis 7-7 of the expander.

The above bores are produced in a plane hexagonal side or surface 5 and are directed towards the central longitudinal axis. Thus a total of twenty--four bores applies, and a cylinder sleeve 8 is inserted in each of these bores.

In the illustrated embodiment, the three cylinder sleeves 8 in a single section have been mutually staggered 120°, and the cylinder sleeves in a section have been staggered 60°relative to the cylinder sleeves of an adjacent section. Instead of placing the cylinder sleeves 8 in the above bores in the cylinder housing 2, it is, of course, possible to manufacture a suitable cylinder bore allowing a direct insertion of a piston.

The illustrated embodiment with cylinder sleeves 8 is such that a piston 9 is inserted in each sleeve. The piston surface of each piston 9 facing away from the longitudinal axis is secured on an expander segment 10 partially surrounding the cylinder housing 2. A total of six such expander segments 10 applies, each expander segment being circular in such a manner that in the assembled state of the of the expander 1 they abut one another completely or substantially along their edges extending in the longitudinal direction so as to form a closed cylindrical surface. Thus four pistons 9 are secured to each of the six expander segments 10, cf. in particular, Fig. 1.

The bores 6 allow a feeding of pressurised hydraulic oil to the piston surface facing the longitudinal axis in such a manner that said bore 6 forms part of a hydraulic pipeline for the feeding of said hydraulic oil pressure.

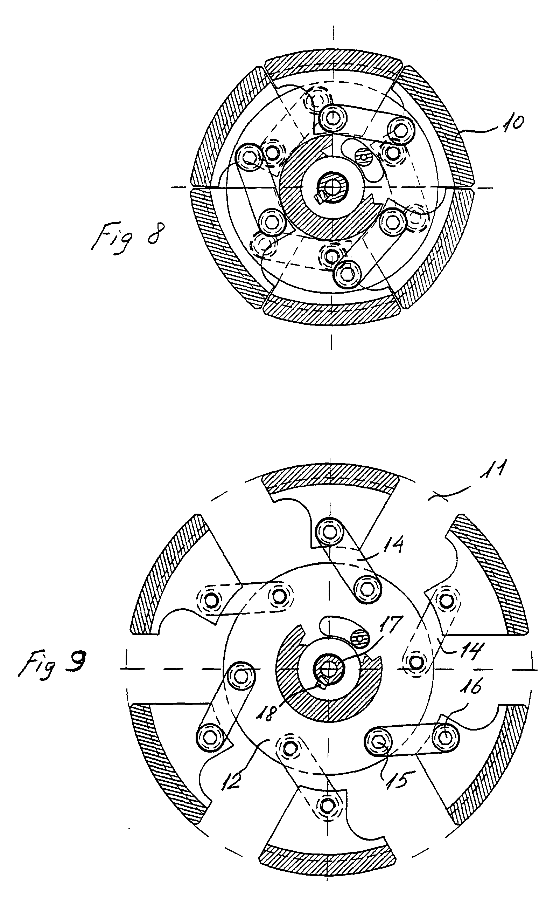

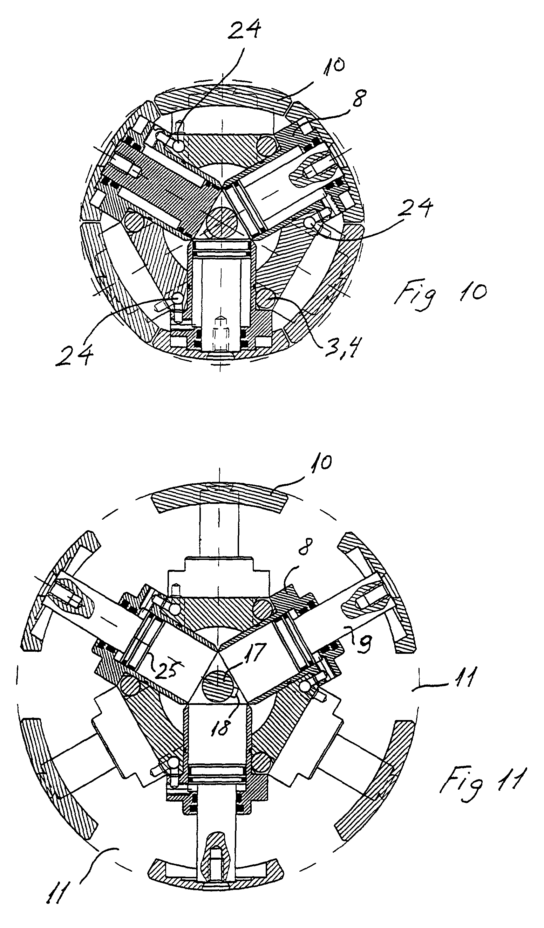

When hydraulic pressure is applied for expanding the pistons 9 and consequently the expander segments 10 secured to said pistons, the diameter of the cylinder formed by the expander segments is increased, as shown in Figs. and 7 and on a larger scale in the corresponding Figs. 9 and 10. As a result, spaces 11 are formed between the longitudinal edges of the individual expander segments 10.

Now you can imagine that some of the expander segments 10 face less resistance than other segments from the collapsed pipeline into which the hydraulically actuatable expander is inserted so as to straighten and repair said pipeline. It is also possible to image that the resistance to the expansion of an expander segment 10 is stronger at one end of said expander segment than at the opposite end. Therefore a risk exists that the expander segments 10 are not always positioned on the same circular arc or that the expander does not maintain its circular-cylindrical shape, but becomes frusto-conical.

Therefore at least two synchronizing mechanisms are provided, cf. Fig. 4 showing the folded state of the expander and Fig. 5 showing the expanded state of said expander. The same synchronizing mechanisms are shown on a larger scale in Figs. 8 and 9, respectively. The synchronizing mechanism shown in Figs. 4, 5, and 8, 9 is as shown arranged at the sectional line B-B where the first module begins. A second corresponding synchronizing mechanism is arranged at the location where the last module ends in such a manner that the two synchronizing mechanisms are symmetrically arranged around the transverse centre of the expander.

Each synchronizing mechanism comprises a synchronizing disk 12 arranged coaxially with the central longitudinal axis of the expander. The synchronizing disk 12 is pivotally connected to each of the expander segments 10 or to a disk segment 13 secured thereto by means of respective synchronizing arms 14. The illustrated embodiment includes thus six synchronizing arms 14. One end of each synchronizing arm 14 is pivotally journalled on the synchronizing disk 12 at bearings 15 arranged at the same mutual angular distance, here 60° and at the same distance from the centre of the disk. The other end of the synchronizing arms 14 is pivotally journalled in bearings 16 in the respective disk segment 13 on each of the expander segments. As illustrated in the drawing, the synchronizing arms 14 are arranged alternately on one side and the opposite side of the synchronizing disk 12. It appears from Figs. 5 and 9, that when the expander expands the synchronizing disk 12 turns counter-clockwise, cf. Figs. 4, 5, 8, and 9.

It appears furthermore that the individual expander segments 10 are bound to expand in the same extent all the time.

As stated above, the expander 1 comprises at least one additional synchronizing mechanism of a completely identical structure. The synchronizing mechanisms are interconnected by means of a shaft 17 extending in the central longitudinal axis of the expander through a central opening in each of the synchronizing disks 12 and being secured thereto by means of keyway connections 18. As a result, the synchronizing disks 12 interconnected by means of the shaft 17 are forced to turn the same number of degrees counterclockwise during the expansion of the expander. Therefore the expander segments are expanded to the same extent opposite each of the two synchronizing mechanisms, and consequently the expander maintains its circular-cylindrical shape during the entire expansion irrespective of whether it faces more resistance at some areas than at other areas.

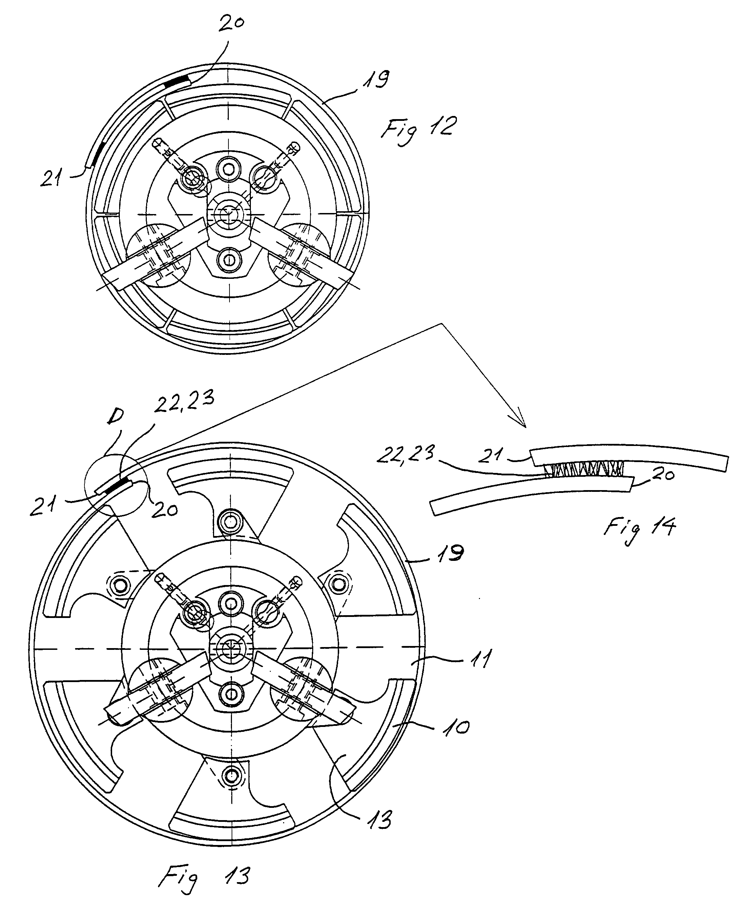

As illustrated in Figs. 12 and 13, a flexible plate 19 with overlapping edges 20 and 21 is arranged around the expander 1. This plate extends in the entire longitudinal direction of the expander and covers thus both the expander segments 10 and the spaces 11 resulting between said expander segments 10 when the expander 1 expands. The plate 19 is preferably a stainless rolled plate, but it can, of course, also be a plate of any other material, such as plastics. Locking means 22 and 23, respectively, are provided adjacent each of the overlapping edges 20, 21 of the plate, cf. Figs. 12 and 13. The locking means 22 and 23 are adapted to automatically enter a locking engagement when the desired straightening of the pipeline has been completed. When the expander has expanded to such an extent that the pipeline has been straightened, the two locking means 22 and 23 arranged on their respective sides of the pate 19 meet and position themselves atop one another as shown in Figs. 13 and more clearly in Fig. 14. The locking means 22, 23 can for instance as it is known be grooves and projections, respectively, in the surface of the plate 19, but it is according to the invention preferred that said locking means are provided in form of a strong dual lock traded under the Trade Mark Dual Lock.

It turned out that locking means 22, 23 of this type are highly suitable for maintaining the plate 19 in the expanded state after the expander has been caused to contract so that it can be removed from the location in question inside the pipeline. Thus the plate 19 forms a plate cylinder supporting the damaged, but straightened pipeline when the expander 1 contracts and is removed. Long pipelines can be straightened by repeating the process, and the inserted plate cylinders 19 can be used for the final repair or as preparation for a local repair prior to the insertion of a new plastic lining into a pipeline.

All the illustrated twenty-four piston cylinder arrangements are of the same type for practical reasons because they are double-acting. As a result, they can all assist in the active withdrawal of the expander from the expanded state. It is, of course, obvious that the expander segments or some of said expander segments may be of a single-effect type. The feeding of the pressurized hydraulic oil is as stated above performed through the bore 6 while the supply of oil pressure for the returning of the pistons 9 is performed through channels 24 in the cylinder housing. As shown in Fig. 10, this hydraulic pressure acts on the opposite side 25 of each piston.

When cylinder sleeves 8 are used for surrounding the pistons 9 it is obvious that it is easy to replace these cylinder sleeves 8 by other cylinder sleeves in such a manner that it is possible to obtain a larger stroke and accordingly to use the expander for straightening pipelines of a larger diameter.

## Claims

1. A hydraulically actuatable expander for straightening and repairing partially collapsed pipelines by way of an insertion therein, **characterised in that** it comprises:
at least one elongated cylinder housing with a central longitudinal axis and a plurality of cylinder bores or cylinder sleeves in a single section transverse to said longitudinal axis,
a piston inserted in each cylinder bore or each cylinder sleeve, whereby the piston surface of said piston facing away from the longitudinal axis is secured on an expander segment partially surrounding the cylinder housing, and where the piston surface facing the longitudinal axis communicates with a hydraulic channel for the supply of hydraulic pressure for the expansion of the pistons and consequently of the expander segments secured thereto, said expander segments together surrounding the cylinder housing,
at least two synchronizing mechanisms arranged at regular intervals in the longitudinal direction of the cylinder housing and being connected to the expander segments in such a manner that all said expander segments expand synchronously to the same extent, where said two synchronizing mechanisms furthermore are interconnected such that the expander segments also expand to the same extent at the position of one and at the position of the second synchronizing mechanism,
and a flexible plate with overlapping edges arranged around the expander segments in such a manner that it continuously covers the expander segments and the spaces therebetween during the expansion,
as well as locking means adjacent each of the overlapping edges of the plate, said locking means automatically entering a locking engagement when the desired straightening of the pipeline has been obtained.

2. Expander as claimed in claim 1, **characterised in that** it comprises several cylinder bores or cylinder sleeves in a common section of the cylinder housing, said cylinder bores or said cylinder sleeves being arranged at a regular angular distance.

3. Expander as claimed in claim 1 or 2, **characterised in that** the cylinder housing comprises several sections succeeding one another in the longitudinal direction of said cylinder housing, said sections forming a module.

4. Expander as claimed in claim 3, **characterised in that** the cylinder housing is made of several interconnected modules.

5. Expander as claimed in claims 2 to 4, **characterised in that** it comprises four modules, each modules comprising two sections with three cylinder sleeves provided with their respective pistons.

6. Expander as claimed in claims 1 to 5, **characterised in that** it comprises two synchronizing mechanisms, each synchronizing mechanism being provided with a synchronizing disk pivotally connected to each expander segment by means of a plurality of synchronizing arms, where one end of said synchronizing arms is pivotally connected to the synchronizing disk and the opposite end is pivotally connected to their respective expander segments, whereby the synchronizing disks of said two synchronizing mechanisms are permanently interconnected by means of a shaft extending in the central longitudinal axis of the expander.

## Patentansprüche

1. Hydraulisch angetriebene Erweiterungsvorrichtung zum Richten und Reparieren von teilweise zusammengebrochenen Rohrleitungen durch einen Einsatz darin, **dadurch gekennzeichnet, dass** sie umfasst:
mindestens ein langgestrecktes Zylindergehäuse mit einer zentralen Längsachse und einer Vielzahl von Zylinderbohrungen oder Zylinderhülsen in einer einzigen Sektion quer zu der Längsachse,
in jeder Zylinderbohrung oder jeder Zylinderhülse einen eingesetzten Kolben, wodurch die Kolbenfläche des Kolbens, die von der Längsachse wegweist, auf einem Segment der Erweiterungsvorrichtung befestigt ist, das das Zylindergehäuse teilweise umgibt, und wo die Kolbenfläche, die der Längsachse zugewandt ist, zur Versorgung mit hydraulischem Druck für die Erweiterung der Kolben und folglich der daran befestigten Segmente der Erweiterungsvorrichtung mit einem Hydraulikkanal in Verbindung steht, wobei die Segmente der Erweiterungsvorrichtung zusammen das Zylindergehäuse umgeben,
mindestens zwei Synchronisierungsmechanismen, die in regelmässigen Intervallen in Längsrichtung des Zylindergehäuses angeordnet sind und mit den Segmenten der Erweiterungsvorrichtung verbunden sind, in der Art, dass alle Segmente der Erweiterungsvorrichtung sich synchron in demselben Mass erweitem, wo die beiden Synchronisierungsmechanismen femer miteinander verbunden sind, derart, dass die Segmente der Erweiterungsvorrichtung sich an der Position des einen und an der Position des zweiten Synchronisierungsmechanismus auch in demselben Mass erweitern,
und eine flexible Platte mit überlappenden Kanten, die um die Segmente der Erweiterungsvorrichtung angeordnet ist, in der Art, dass sie die Segmente der Erweiterungsvorrichtung und die Räume dazwischen während der Erweiterung kontinuierlich bedeckt,
sowie Befestigungsmittel im Bereich jeder der überlappenden Kanten der Platte, wobei die Befestigungsmittel automatisch in einen Befestigungseingriff eintreten, wenn das gewünschte Richten der Rohrleitung erreicht wurde.

2. Erweiterungsvorrichtung nach Anspruch 1, **dadurch gekennzeichnet, dass** sie mehrere Zylinderbohrungen oder Zylinderhülsen in einer gemeinsamen Sektion des Zylindergehäuses umfasst, wobei die Zylinderbohrungen oder Zylinderhülsen in einem regelmässigen Winkelabstand angeordnet sind.

3. Erweiterungsvorrichtung nach Anspruch 1 oder 2, **dadurch gekennzeichnet, dass** das Zylindergehäuse mehrere in Längsrichtung des Zylindergehäuses aufeinanderfolgende Sektionen umfasst, wobei die Sektionen einen Modul bilden.

4. Erweiterungsvorrichtung nach Anspruch 3, **dadurch gekennzeichnet, dass** das Zylindergehäuse aus mehreren miteinander verbunden Modulen ausgebildet ist.

5. Erweiterungsvorrichtung nach einem der Ansprüche 2 bis 4, **dadurch gekennzeichnet, dass** sie vier Module umfasst, wobei jeder Modul zwei Sektionen mit drei Zylinderhülsen umfasst, die mit ihren entsprechenden Kolben versehen sind.

6. Erweiterungsvorrichtung nach einem der Ansprüche 1 bis 5, **dadurch gekennzeichnet, dass** sie zwei Synchronisierungsmechanismen umfasst, wobei jeder Synchronisierungsmechanismus mit einer Synchronisierungsscheibe versehen ist, die mittels einer Vielzahl von Synchronisierungsarmen schwenkbar mit jedem Segment der Erweiterungsvorrichtung verbunden ist, wo eine Ende der Synchronisierungsarme schwenkbar mit der Synchronisierungsscheibe verbunden ist und das gegenüberliegende Ende mit seinem entsprechenden Segment der Erweiterungsvorrichtung verbunden ist, wodurch die Synchronisierungsscheiben der beiden Synchronisierungsmechanismen mittels einer sich in der zentralen Längsachse der Erweiterungsvorrichtung erstreckenden Welle permanent miteinander verbunden sind.

## Revendications

1. Mandrin élargisseur destiné à être commandé hydrauliquement et destiné à redresser et réparer des canalisations partiellement affaissées par insertion dans les canalisations, **caractérisé en ce qu'**il comprend :
au moins un boîtier cylindrique allongé ayant un axe longitudinal central et plusieurs trous de cylindre ou manchons de cylindre dans une coupe unique transversale à l'axe longitudinal,
un piston inséré dans chaque trou ou manchon de cylindre, afin que la surface du piston tournée du côté opposé à l'axe longitudinal soit fixée sur un segment élargisseur entourant partiellement le boîtier cylindrique, la surface du piston tournée vers l'axe longitudinal communiquant avec un canal hydraulique destiné à transmettre une pression hydraulique pour l'élargissement des pistons et en conséquence des segmenta élargisseurs qui leur sont fixés, les segments élargisseurs entourant ensemble le boîtier cylindrique,
au moins deux mécanismes de synchronisation placés à intervalles réguliers dans la direction longitudinale du boîtier cylindrique et raccordés aux segments élargisseurs de manière que tous les segments élargisseurs s'écartent en synchronisme avec la même amplitude, les deux mécanismes de synchronisation étant en outre interconnectés afin que les segments élargisseurs présentent un élargissement de même amplitude à l'emplacement du premier mécanisme et à l'emplacement du second mécanisme de synchronisation, et
une plaque flexible ayant des bords qui se recouvrent et placée autour des segments élargisseurs de manière qu'elle recouvre de façon continue les segments élargisseurs et les espaces compris entre eux pendant l'élargissement, et
un dispositif de blocage adjacent à chaque bord de recouvrement de la plaque, le dispositif de blocage pénétrant automatiquement en position de coopération par blocage lorsque le redressement voulu de la canalisation a été obtenu.

2. Mandrin élargisseur selon la revendication 1, **caractérisé en ce qu'**il comprend plusieurs trous ou manchons de cylindre dans une section commune du boîtier cylindrique, les trous ou manchons de cylindre étant disposés à des distances angulaires régulières.

3. Mandrin élargisseur selon la revendication 1 ou 2, **caractérisé en ce que** le boîtier cylindrique comprend plusieurs tronçons qui se succèdent dans la direction longitudinale du boîtier cylindrique, les tronçons formant un module.

4. Mandrin élargisseur selon la revendication 3, **caractérisé en ce que** le boîtier cylindrique est formé de plusieurs modules interconnectés.

5. Mandrin élargisseur selon les revendications 2 à 4, **caractérisé en ce qu'**il comporte quatre modules, chaque module comprenant deux tronçons ayant trois manchons de cylindre munis de pistons respectifs.

6. Mandrin élargisseur selon les revendications 1 à 5, **caractérisé en ce qu'**il comprend deux mécanismes de synchronisation, chaque mécanisme de synchronisation ayant un disque de synchronisation raccordé de manière pivotante à chaque segment élargisseur par plusieurs bras de synchronisation, une première extrémité des bras de synchronisation étant raccordée de manière pivotante au disque de synchronisation et l'extrémité opposée étant raccordée de manière pivotante aux segments élargisseurs respectifs, si bien que les disques de synchronisation des deux mécanismes de synchronisation sont interconnectés de manière permanente par un arbre qui s'étend suivant l'axe longitudinal central du mandrin élargisseur.
